Europäisches Patentamt

European Patent Office

Office européen des brevets

(11) Veröffentlichungsnummer: **0 547 324 B1**

## EUROPÄISCHE PATENTSCHRIFT

(45) Veröffentlichungstag der Patentschrift: **26.07.95**

(51) Int. Cl.⁶: **C08F 2/24**, C08F 291/00

(21) Anmeldenummer: **92117515.4**

(22) Anmeldetag: **14.10.92**

(54) **Verfahren zur Herstellung grossteiliger, wässriger Kunststoffdispersionen.**

(30) Priorität: **19.12.91 DE 4141942**

(43) Veröffentlichungstag der Anmeldung:
**23.06.93 Patentblatt 93/25**

(45) Bekanntmachung des Hinweises auf die
Patenterteilung:
**26.07.95 Patentblatt 95/30**

(84) Benannte Vertragsstaaten:
**AT BE DE ES FR GB IT NL SE**

(56) Entgegenhaltungen:
**EP-A- 0 037 150
EP-A- 0 330 865
US-A- 3 842 025**

(73) Patentinhaber: **HÜLS AKTIENGESELLSCHAFT**

**D-45764 Marl (DE)**

(72) Erfinder: **Scholz, Bernhard-Peter, Dr.
Clemensstrasse 5
W-4353 Oer-Erkenschwick (DE)**
Erfinder: **Walther, Klaus, Dr.
Am Alten Sportplatz 17 a
W-4370 Marl (DE)**
Erfinder: **Riemer, Heinz, Dr.
Fritz-Reuter-Strasse 15
W-4250 Bottrop 2 (DE)**

## Beschreibung

Die Erfindung betrifft ein Verfahren entsprechend dem Oberbegriff des Patentanspruchs 1. Unter großteiligen Dispersionen werden Dispersionen verstanden, deren Teilchen einen volumenmittleren Durchmesser dv im Bereich von 130 bis 1 000, insbesondere von 150 bis 800 nm aufweisen. Derartige Dispersionen sind noch nach Konzentrierung auf einen Feststoffgehalt von > 55 Massen-% fließfähig. Sie gelten daher als niedrigviskos.

In der GB-PS 991 394 (Polymer Corp. I) wird ein Verfahren zur Herstellung großteiliger, wäßriger Kunststoffdispersionen beschrieben, in welchem ein nichtionisches, wasserlösliches, polymeres Hilfsmittel (agglomerating agent) einer wäßrigen Kunststoffdispersion nach Beendigung der Polymerisation zugesetzt wird. Durch Abdestillieren eines Teils des Wassers werden niedrigviskose Kunststoffdispersionen mit hohem Feststoffgehalt erhalten. Die polymeren Hilfsmittel sind vorzugsweise im wesentlichen unverzweigt. Sie weisen eine Molekülstruktur mit hydrophoben und hydrophilen Resten auf. Weniger bevorzugte polymere Hilfsmittel weisen eine AB-Blockstruktur mit einem hydrophoben Rest A und einem unverzweigten, hydrophilen Rest B auf. Diese sind das Monolaurat, das Monostearat und das Monooleat eines Polyethylenglykols (Polyethylenoxid) mit dem Molekulargewicht 6 000. Sie werden in einer Menge von 0,1 Massenteilen, bezogen auf die gesamten Monomeren, zusammen mit Natriumsulfat eingesetzt (Example VI, e). Das geschilderte Verfahren kann in der Weise abgewandelt werden, daß das polymere Hilfsmittel bereits dem Reaktionsgemisch, aus welchem die Kunststoffdispersion erhalten wird, zugesetzt wird und zwar vor oder nach der Initiierung der Polymerisation (Patentanspruch 18).

In der DE-OS 22 22 176 (Polymer Corp. II) wird ein Verfahren zur Herstellung großteiliger, wäßriger Kunststoffdispersionen beschrieben, in welchem ein nichtionisches, wasserlösliches, polymeres Hilfsmittel dem Reaktionsgemisch, aus welchem die Kunststoffdispersion erhalten wird, vor der Initiierung der Polymerisation zugesetzt wird. Das polymere Hilfsmittel ist im wesentlichen unverzweigt. Es weist eine Molekülstruktur mit hydrophoben und hydrophilen Resten auf. Polymere Hilfsmittel, welche eine AB-Blockstruktur mit einem hydrophoben Rest A und einem hydrophilen Rest B aufweisen, werden nicht genannt. Mit dem geschilderten Verfahren ist es schwierig, großteilige und zugleich koagulatarme Dispersionen herzustellen.

In der EP-OS 0 330 865 wird ein Verfahren entsprechend dem Oberbegriff des Patentanspruchs 1 beschrieben. Es gestattet, gezielt die Teilchengröße der Dispersionen unabhängig von anderen Zielgrößen, wie beispielsweise dem Molekulargewicht der Polymerisate, einzustellen, und zwar dv und die Teilchengrößenverteilung. Insbesondere läßt sich gezielt eine enge, monomodale Verteilung einstellen. Ein bevorzugtes polymeres Hilfsmittel ist ein oxidiertes Polyethylenoxid. Es ist ein Gemisch aus einem unverzweigten und einem verzweigten Polyethylenoxid. Die Molekülstrukturen der beiden Anteile des Gemisches weisen keine hydrophoben Reste auf. Ein anderes bevorzugtes polymeres Hilfsmittel ist ein Reaktionsprodukt aus dem Trimerisierungsprodukt von Isophorondiisocyanat einerseits und Polyethylenoxidmonoethylether andererseits. Es ist ein Gemisch, dessen Hauptkomponente eine Molekülstruktur mit einem verzweigten hydrophoben Rest und drei hydrophilen Resten aufweist. Die Hauptkomponente ist also verzweigt und weist nicht eine AB-Blockstruktur mit einem hydrophoben Rest A und einem hydrophilen Rest B auf.

Die polymeren Hilfsmittel der EP-OS 0 330 865, welche als nächstliegender Stand der Technik anzusehen ist, sind in der Regel uneinheitlich, d. h. sie liegen in der Regel als Gemisch vor, dessen Zusammensetzung in Abhängigkeit von den Bedingungen zur Herstellung des polymeren Hilfsmittels in seiner Zusammensetzung schwankt. Unter Umständen schwankt auch die Struktur der Komponenten des Gemisches in Abhängigkeit von den Herstellungsbedingungen. Dementsprechend schwankt die agglomerierende Wirkung der polymeren Hilfsmittel. Sie erfüllen daher nicht immer die in der Praxis geforderten hohen Anforderungen hinsichtlich der Reproduzierbarkeit ihrer agglomerierenden Wirkung. Sie können durch übliche Analysenmethoden nur unzureichend charakterisiert werden.

Die Aufgabe der Erfindung besteht darin, ein Verfahren zur Herstellung großteiliger, wäßriger Kunststoffdispersionen bereitzustellen, welches die Nachteile des geschilderten Standes der Technik überwindet.

Die Aufgabe wurde in überraschender Weise wie in den Patentansprüchen angegeben gelöst. Die Lösung ist überraschend, weil die Entwicklung des Standes der Technik zwar hinsichtlich des Zeitpunktes der Zugabe des polymeren Hilfsmittels zur Erfindung hinführt, hinsichtlich seiner Struktur jedoch von der Erfindung wegführt.

Der Gegenstand der Erfindung ist somit ein Verfahren zur Herstellung großteiliger, wäßriger Kunststoffdispersionen durch Emulsionspolymerisation von radikalisch polymerisierbaren Monomeren in wäßriger Phase als Dispersionsmedium in Gegenwart eines anionischen Emulgators, eines nichtionischen, wasserlöslichen polymeren Hilfsmittels, eines freie Radikale bildenden Polymerisationsinitiators und üblicher Polymerisationshilfsmittel. Das Verfahren ist durch die folgenden zusätzlichen Merkmale charakterisiert:

Vor der Polymerisation sollen, bezogen auf 100 Massenteile des (der) Monomeren, 0,0001 bis 0,05, vorzugsweise 0,0005 bis 0,02 Massenteile eines im wesentlichen unverzweigten Polyethylenoxids mit einer AB-Blockstruktur als polymeres Hilfsmittel zugesetzt werden, wobei A einen 15 bis 70, vorzugsweise 18 bis 50 C-Atome umfassenden, gegebenenfalls verzweigten hydrophoben Rest und B einen unverzweigten, wenigstens 50, vorzugsweis wenigstens 60, ganz besonders bevorzugt 80 bis 300 Ethylenoxideinheiten umfassenden, hydrophilen Rest bedeuten.

Der hydrophobe Rest A ist vorzugsweise ein Alkylrest, wie beispielsweise der Oleylrest, oder ein (Alkyl)arylrest, wie beispielsweise ein Nonylphenylrest, ein Dinonylphenylrest oder ein Distyrylphenylrest.

Die polymeren Hilfsmittel werden in der Regel durch Umsetzung von geeigneten Phenolen, Alkoholen oder Aminen mit der gewünschten Menge Ethylenoxid in bekannter Weise erhalten. Sie können durch Gelchromatografie (GPC) charakterisiert werden.

Außerdem gilt die Vorschrift, daß zu Beginn der Polymerisation wasserlösliches Alkali- und/oder Ammoniumsalz zugegen ist mit der Maßgabe, daß in der wäßrigen Phase, bezogen auf 1 l derselben, 1 bis 250, insbesondere 10 bis 100 mmol nicht emulgatorgebundene Alkali- und/oder Ammoniumionen vorliegen.

Darüber hinaus ist zu beachten, daß die gesamte Polymerisation in Batch-Fahrweise durchgeführt oder die Polymerisation in Batch-Fahrweise begonnen und nach der Teilchenbildungsphase unter üblichen Bedingungen zur Pfropfpolymerisation, wobei die Bildung neuer Teilchen vermieden wird, fortgeführt und zu Ende geführt wird. Die Teilchenbildungsphase ist in der Regel < 15, insbesondere < 10 min nach Beginn der Polymerisation beendet.

Im Falle des Wechsels der Fahrweise werden in der Regel > 10 Massen-% der gesamten Monomeren zur Batch-Fahrweise vorgelegt. In der Regel erfolgt der Wechsel der Fahrweise nicht unmittelbar nach der Teilchenbildungsphase, welche unter Umständen nicht einmal 1 min dauert, sondern erst nach einem Umsatz von > 50 Massen-% der vorgelegten Monomeren.

Die semikontinuierliche Emulsionszulauffahrweise liegt vor, wenn nur ein Teil des Emulgators im Reaktor vorgelegt und Monomer, Initiator und der Rest des Emulgators im Verlauf der Polymerisation unter Berücksichtigung der zulässigen Füllhöhe des Reaktors zugegeben wird.

Die semikontinuierliche Monomerzulauffahrweise liegt vor, wenn der gesamte Emulgator im Reaktor vorgelegt und Monomer sowie gegebenenfalls Initiator im Verlauf der Polymerisation unter Berücksichtigung der zulässigen Füllhöhe des Reaktors zugegeben wird.

Diese Definitionen [vgl. H. Fikentscher et al., Angew. Chemie 72 (1960), Seite 860, rechte Spalte, letzter Absatz, bis Seite 861, linke Spalte, Mitte] gelten in der Weise, daß in der Vorlage zu Beginn der Zulauffahrweise das in Batch-Fahrweise nach der Teilchenbildungsphase resultierende Gemisch vorliegt.

Wesentliches Element des Verfahrens ist ein sehr wirksames, die Teilchengröße steuerndes System, welches den anionischen Emulgator, das im wesentlichen unverzweigte Polylethylenoxid in bemerkenswert geringer Menge und die überraschend wirksamen, nicht emulgatorgebundenen Alkali- und/oder Ammoniumionen umfaßt. Die Komponenten des die Teilchengröße steuernden Systems der Erfindung stehen somit in einem funktionalen Zusammenhang.

Nach dem Verfahren der Erfindung können Homo- und Copolymerisate der technisch interessanten, radikalisch polymerisierbaren Monomeren hergestellt werden. Die Monomeren können monoolefinisch ungesättigt sein, wie beispielsweise Vinylchlorid, Vinylidenchlorid, Vinylester, monoalkenylaromatische Verbindungen, Vinylpyridin, (Meth)acrylnitril, (Meth)acrylsäureester und $\alpha,\beta$-olefinisch ungesättigte Carbonsäuren. Die Monomeren können zur Gruppe der aliphatischen, konjugierten Diene gehören, wie beispielsweise 1,3-Butadien und Isopren. Der Anteil der ungesättigten Carbonsäuren im Monomerengemisch ist in der Regel nicht höher als 30 Massen-%. Die Polymerisate können durch einen geringen Anteil eines anderen Monomers, wie beispielsweise (Meth)acrylamid, modifiziert sein.

Bei einem bevorzugten Verfahren besteht das Monomerengemisch zu 25 bis 68,5 Massen-% aus hartmachendem Monomer aus der Gruppe, bestehend aus Styrol, (Meth)acrylnitril und Methylmethacrylat, zu 30 bis 70 Massen-% aus weichmachendem Monomer aus der Gruppe, bestehend aus 1,3-Butadien, ($C_4$- bis $C_8$-Alkyl)(meth)acrylat und zu 1,5 bis 5 Massen-% aus einer $\alpha,\beta$-olefinisch ungesättigten Carbonsäure aus der Gruppe, bestehend aus (Meth)acrylsäure, Itaconsäure, Fumarsäure und den Halbestern der beiden letzteren. Die erhaltenen Copolymerisatdispersionen haben eine minimale Filmbildungstemperatur von < 100 °C. Sie sind elektrolytstabil und eignen sich vorteilhaft zur Herstellung von Bestrichmaterialien für Teppiche (Vorstrich) und von Papierstreichmassen.

Nach dem Verfahren hergestellte, spezielle Kunststoffdispersionen auf Basis von Styrol und Acrylaten eignen sich als Bindemittel in hydraulisch abbindenden Massen, beispielsweise in Fliesenklebern und Fugendichtungsmassen, sowie als Bindemittel in Dispersionsfarben. Kunststoffdispersionen auf Basis von > 80 Massen-% hartmachendem Monomer, bezogen auf die gesamten Monomeren, eignen sich als organische Pigmente (Plastikpigmente) in Papierstreichmassen zur Herstellung von Papier mit hohem Glanz.

Als Emulgatoren kommen die üblichen anionischen Emulgatoren in Frage, insbesondere

- Sulfonsäuren, wie Alkylsulfonsäuren, Alkylarylsulfonsäuren, $C_{13}$- bis $C_{18}$-Sulfobernsteinsäureester und deren Alkali- und Ammoniumsalze;
- $C_{10}$- bis $C_{20}$-Schwefelsäurehalbester und deren Alkali- und Ammoniumsalze;
- Fettseifen und Harzseifen.

Die drei Gruppen von Emulgatoren kommen in Frage, wenn im alkalischen pH-Bereich polymerisiert werden soll. Die beiden ersten Gruppen kommen in Frage, wenn im sauren pH-Bereich polymerisiert werden soll, insbesondere bei der Herstellung von carboxylierten Dispersionen.

Der Polymerisationsinitiator ist ein üblicher, Radikale bildender Polymerisationsinitiator. Er kann ein organisches Peroxid oder Hydroperoxid, wie beispielsweise Cumolhydroperoxid, in Verbindung mit einem in Wasser dispergierbaren Reduktionsmittel, wie beispielsweise Eisen-II-sulfoxylatkomplex (Initiator vom Redoxtyp) oder ein anorganisches Peroxid, wie beispielsweise Kaliumperoxodisulfat, Natriumperborat oder Wasserstoffperoxid, sein. Mit dem Initiator vom Redoxtyp kann die Polymerisation bei einer Temperatur zwischen 0 und 50 °C durchgeführt werden. Mit dem anorganischen Peroxid wird die Polymerisation im allgemeinen zwischen 50 und 85 °C durchgeführt.

Mit steigender Einsatzmenge des Initiators sinkt das Molekulargewicht des Polymerisates.

Mit der Emulgatormenge kann, gegebenenfalls in Verbindung mit der Persulfatmenge, die Teilchengrößenverteilung der Dispersionen gesteuert werden. Im Falle der Herstellung carboxylierter Dispersionen erhält man in der Regel mit einer Emulgatormenge von < 2 Massenteilen unabhängig von der Persulfatmenge eine enge, monomodale und mit einer Emulgatormenge von größer/gleich 2 Massenteilen in Verbindung mit einer Persulfatmenge von größer/gleich 0,8 Massenteilen eine weniger enge, bimodale Verteilung. Die Regel gilt mit höheren Grenzen für die Herstellung von nicht carboxylierten Dispersionen. Die Grenzen können durch einfache, orientierende Versuche ermittelt werden.

Im Zusammenhang mit der Verfahrensvariante, bei welcher die gesamte Polymerisation in Batch-Fahrweise durchgeführt wird, gibt es eine bevorzugte Vorgehensweise. ≥ 0,05 Massen-% Emulgator, bezogen auf die gesamten Monomeren, werden vorgelegt. Nach einem Monomerumsatz von 3 bis 30 Massen-%, bezogen auf die gesamten Monomeren, wird der restliche Emulgator dosiert. Dabei führt eine hohe Gesamtemulgatormenge zu kleinen, eine niedrige Gesamtemulgatormenge zu großen Teilchen. Eine hohe Dosiergeschwindigkeit des Emulgators führt zu kleinen, eine niedrige Dosiergeschwindigkeit des Emulgators zu großen Teilchen.

Als Alkali- und Ammoniumsalze kommen beispielsweise die Chloride, Sulfate, Persulfate, Perborate, Carbonate, Phosphate und auch die Salze üblicher Polymerisationshilfsmittel, wie beispielsweise die als Komplexbildner dienenden Ethylendiamintetraacetate und die als Dispergiermittel dienenden Salze der Kondensationsprodukte aus Naphthalinsulfonsäure und Formaldehyd, der Poly-2-acrylamido-2-methylpropan-sulfonsäure (DE-AS 25 40 468) und der Polysulfonsäuren eines Alkans mittlerer Kettenlänge (EP-PS 0 036 904) in Frage.

Außer den Polymerisationshilfsmitteln, deren Alkali- und Ammoniumionen in der Gesamtbilanz der nicht emulgatorgebundenen Alkali- und Ammoniumionen berücksichtigt werden müssen, können weitere übliche Polymerisationshilfsmittel zugesetzt werden, beispielsweise Regler, wie Dodecylmercaptan.

Die Polymerisation wird normalerweise bis zu einem Umsatz von 100 Massen-% durchgeführt. Sie kann jedoch auch bei einem weniger hohen Umsatz abgebrochen werden. Die Restmonomeren werden dann in einem separaten Verfahrensschritt zurückgewonnen.

Zur Herstellung der Dispersionen kann ein druckfester Rührkessel verwendet werden, der zur Abführung der Polymerisationswärme mit einem Kühlmantel oder sonstigen bekannten Kühlvorrichtungen ausgestattet ist.

Im Falle der Polymerisation in Batch-Fahrweise wird der Polymerisationskessel nach Evakuieren und Stickstoffspülung in üblicher Weise mit Wasser, Emulgator, Monomeren und den Hilfsmitteln gefüllt. Das Monomer/Wasser-Mengenverhältnis wird vorzugsweise so eingestellt, daß sich nach der Polymerisation ein Feststoffgehalt von 30 bis 55 Massen-% ergibt. Dann wird die Polymerisation durch Zugabe des Polymerisationsinitiators und durch Erhöhung der Temperatur gestartet. Die Polymerisationszeit beträgt in der Regel 6 bis 15, vorzugsweise 8 bis 12 Stunden. Wenn bei der Herstellung carboxylierter Dispersionen im sauren pH-Bereich polymerisiert wird, wird nach Beendigung der Polymerisation in der Regel mit Ammoniak auf einen pH-Wert von 8,0 bis 9,0 eingestellt. Die erhaltenen Dispersionen können auf bestimmten Einsatzgebieten direkt, d. h. ohne Veränderung des Feststoffgehaltes und der Viskosität, eingesetzt werden. Manche Einsatzgebiete erfordern das Eindampfen der oben erhaltenen Dispersionen auf den gewünschten Feststoffgehalt. Die Dispersion kann bis auf die Viskosität 1 200 mPa s, gemessen bei Raumtemperatur mit einem Brookfield-Viskosimeter (Spindel 3, 30 Upm), eingedampft werden, wobei je nach vorliegender Teilchengröße und Teilchengrößenverteilung ein Feststoffgehalt von 55 bis 70 Massen-% resultiert. Das Eindampfen erfolgt in der Regel bei 20 bis 60 °C unter Rühren im Vakuum. Solche konzentrierten Dispersionen eignen

4

EP 0 547 324 B1

sich im Falle carboxylierter Synthesekautschukdispersionen vorteilhaft zur Herstellung von Bestrichmaterialien für Teppiche (Vorstrich) und Papier. Nicht carboxylierte Synthesekautschukdispersionen eignen sich zur Teppichrückenschaumbeschichtung und zur Herstellung von Schaumformteilen. Polystyroldispersionen eignen sich als Verstärker für Kautschukdispersionen.

Die Erfindung wird durch die folgenden Beispiele erläutert. Darin bedeuten Prozent (%) Massenprozent und Teile (T.) Massenteile.

Herstellung der wäßrigen Kunststoffdispersionen 1 bis 9

In den Beispielen 1 bis 7 wurde als polymeres Hilfsmittel ein ethoxyliertes Dinonylphenol (150 Mol Ethylenoxid/Mol Phenol; GPC-bestimmtes, gewichtsmittleres Molekulargewicht $\overline{M}w$ = 7134) eingesetzt.

Beispiel 1 (Dispersion 1)

In einem 40-l-Druckreaktor wurden 150 T. vollentsalztes Wasser, 0,75 T. eines handelsüblichen Natrium-($C_{16}$- bis $C_{18}$-Paraffin)-sulfonats, 0,001 T. des ethoxylierten Dinonylphenols, 0,05 T. des Tetranatriumsalzes der Ethylendiamintetraessigsäure, 0,75 T. tert.-Dodecylmercaptan, 2,5 T. Acrylsäure, 47,5 T. Styrol und 50 T. 1,3-Butadien zusammengegeben. Dabei stellte sich der pH-Wert 2,4 ein. Der Ansatz wurde auf 40 °C aufgeheizt. Dann wurde eine wäßrige Lösung von 0,2 T. Ammoniumperoxodisulfat hinzugegeben. Die Temperatur wurde innerhalb von 5 Stunden auf 80 °C erhöht und die Polymerisation während weiterer 4 Stunden fortgeführt und zu Ende geführt (Polymerisationszeit: 5 + 4 = 9 h). Dann wurde mit Ammoniak der pH-Wert 6,9 eingestellt. Die erhaltene Dispersion hatte einen Feststoffgehalt von ca. 40 %. Sie wurde konzentriert, bis sich eine Viskosität von 1 200 mPa s einstellte. Der Feststoffgehalt war dann 53,6 %. Die Dispersion wurde wie in der folgenden Tabelle 1 angegeben charakterisiert.

Beispiele 2 und 3 (Dispersionen 2 und 3)

In den Beispielen 2 und 3 wurde die Initiatormenge und damit die Menge der nicht emulgatorgebundenen Alkali- und Ammoniumionen variiert. Die erhaltenen Dispersionen wurden wie in der Tabelle 1 angegeben charakterisiert.

Beispiel 4 (Dispersion 4)

Im Beispiel 4 wurde wie im Beispiel 1 verfahren, jedoch wurden vor der Polymerisation 0,46 T. Kaliumsulfat, bezogen auf 100 T. Monomer, zugegeben. Die erhaltene Dispersion wurde wie in der Tabelle 1 angegeben charakterisiert. Bei gleicher Menge der nicht emulgatorgebundenen Alkali- und Ammoniumionen wie im Beispiel 3 wurde eine gute Übereinstimmung hinsichtlich dv und Feststoffgehalt bei 1 200 mPa s festgestellt.

Die Beispiele 1 bis 4 verdeutlichen die starke Wirksamkeit der nicht emulgatorgebundenen Alkali- und Ammoniumionen hinsichtlich der Einstellung von dv und des Feststoffgehaltes bei 1 200 mPa s.

Beispiel 5 (Dispersion 5)

In einem 4-l-Glasdoppelmantelreaktor wurden 100 T. vollentsalztes Wasser, 0,1 T. eines handelsüblichen Natrium-($C_{16}$- bis $C_{18}$-Paraffin)-sulfonats, 0,005 T. des ethoxylierten Dinonylphenols, 0,05 T. des Tetranatriumsalzes der Ethylendiamintetraessigsäure, 0,75 T. tert.-Dodecylmercaptan, 2,5 T. Acrylsäure 47,5 T. Styrol und 50 T. n-Butylacrylat zusammengegeben. Dabei stellte sich der pH-Wert 2,2 ein. Der Ansatz wurde auf 40 °C aufgeheizt. Dann wurde eine wäßrige Lösung von 0,5 T. Ammoniumperoxodisulfat hinzugegeben. Die Temperatur wurde innerhalb von 4 h auf 85 °C erhöht und die Polymerisation während weiterer 4 Stunden fortgeführt und zu Ende geführt. Dann wurde mit Ammoniak der pH-Wert 8,5 eingestellt. Die Dispersion wurde wie in der folgenden Tabelle 2 angegeben charakterisiert.

Beispiel 6 (Dispersion 6)

Im Beispiel 6 wurde wie im Beispiel 5 verfahren, jedoch wurden 150 T. vollentsalztes Wasser, 0,25 T. Natriumlaurylsulfat statt des Paraffinsulfonats, 0,02 T. des ethoxylierten Dinonylphenols, 97,5 T. Styrol und kein Butylacrylat eingesetzt. Dabei stellte sich der pH-Wert 2,1 ein. Nach Beendigung der Polymerisation wurde mit Ammoniak der pH-Wert 8,5 eingestellt. Die Dispersion wurde wie in der Tabelle 2 angegeben

5

charakterisiert.

Beispiel 7 (Dispersion 7)

Im Beispiel 7 wurde wie im Beispiel 6 verfahren, jedoch wurden 0,2 T. eines handelsüblichen Natrium-($C_{16}$- bis $C_{18}$-Paraffin)-sulfonats statt des Laurylsulfats, 0,01 T. des ethoxylierten Dinonylphenols und 0,7 T. tert.-Dodecylmercaptan eingesetzt. Die Dispersion wurde wie in der Tabelle 2 angegeben charakterisiert.

Beispiel 8 (Dispersion 8)

Im Beispiel 8 wurde wie im Beispiel 7 verfahren, jedoch wurde statt des dortigen ethoxylierten Dinonylphenols die gleiche Menge eines ethoxylierten Dinonylphenols mit dem Molverhältnis Ethylenoxid/Phenol = 80/1 ($\overline{M}w$ = 3925) eingesetzt.

Beispiel 9 (Dispersion 9)

Im Beispiel 9 wurde wie im Beispiel 8 verfahren, jedoch wurde statt des dortigen ethoxylierten Dinonylphenols die gleiche Menge eines ethoxylierten Distyrylphenols (100 Mol Ethylenoxid/Mol Phenol; $\overline{M}w$ = 4990) eingesetzt.

Die Dispersionen 1 bis 9 sind koagulatarm und weisen eine enge, monomodale Teilchengrößenverteilung auf.

## Tabelle 1

Herstellung und Charakterisierung der Dispersionen 1 bis 4

| Dispersion | Initiator T./100 T. Monomer | $[Na^+]+[K^+]+[NH_4^+]$ nicht emulgatorge- bunden (mmol/l) | PM-zeit (h) ** | O (mN/m) | dv (nm) | U | Feststoffgehalt bei 1 200 mPa s (%) |
|---|---|---|---|---|---|---|---|
| 1 | 0,2 | 12 | 9 | 57,8 | 136 | 0,0074 | 53,6 |
| 2 | 0,5 | 29 | 12 | 52,0 | 187 | 0,0108 | 57,9 |
| 3 | 0,8 | 47 | 15 | 47,1 | 203 | 0,0099 | 59,8 |
| 4 | 0,2 | 47 * | 18 | 48,2 | 198 | 0,0100 | 59,6 |

PM-zeit = Polymerisationszeit; O = Oberflächenspannung

$U$ = Uneinheitlichkeit; $U = \dfrac{dv}{dn} - 1$; dn = zahlenmittlerer Teilchendurchmesser.

dv und dn wurden durch ein elektronenmikroskopisches Meßverfahren in Verbindung mit DIN 66 141 bestimmt.

\* Vor der Polymerisation wurden 0,46 T. Kaliumsulfat, bezogen auf 100 T. Monomer, zugegeben.

\*\* Die Aufheizzeit in Gegenwart des Initiators betrug jeweils 5 h.

EP 0 547 324 B1

Tabelle 2

| Herstellung und Charakterisierung der Dispersionen 5 bis 9 | | | | |
|---|---|---|---|---|
| Dispersion | PM-zeit (h) | 0 (mN/m) | dv (nm) | U |
| 5 | 8 | 44 | 566 | 0,005 |
| 6 | 6 | 45 | 377 | 0,015 |
| 7 | 6 | 43 | 636 | 0,045 |
| 8 | 6 | 43 | 445 | 0,008 |
| 9 | 6 | 44 | 560 | 0,010 |

**Patentansprüche**

1. Verfahren zur Herstellung großteiliger, wäßriger Kunststoffdispersionen durch Emulsionspolymerisation von radikalisch polymerisierbaren Monomeren in wäßriger Phase als Dispersionsmedium in Gegenwart eines anionischen Emulgators, eines nichtionischen, wasserlöslichen, polymeren Hilfsmittels, eines freie Radikale bildenden Polymerisationsinitiators und üblicher Polymerisationshilfsmittel, wobei das polymere Hilfsmittel vor der Polymerisation zugesetzt wird und wobei zu Beginn der Polymerisation wasserlösliches Alkali- und/oder Ammoniumsalz zugegen ist mit der Maßgabe, daß in der wäßrigen Phase, bezogen auf 1 l derselben, 1 bis 250 mmol nicht emulgatorgebundene Alkali- und/oder Ammoniumionen vorliegen, und wobei die gesamte Polymerisation in Batch-Fahrweise durchgeführt oder die Polymerisation in Batch-Fahrweise begonnen und nach der Teilchenbildungsphase unter üblichen Bedingungen zur Pfropfpolymerisation, wobei die Bildung neuer Teilchen vermieden wird, fortgeführt und zu Ende geführt wird,
dadurch gekennzeichnet,
daß als polymeres Hilfsmittel ein im wesentlichen unverzweigtes Polyethylenoxid mit einer AB-Blockstruktur, wobei A einen 15 bis 70 C-Atome umfassenden, gegebenenfalls verzweigten hydrophoben Rest und B einen unverzweigten, wenigstens 50 Ethylenoxideinheiten umfassenden, hydrophilen Rest bedeuten, zugesetzt wird und die Menge des polymeren Hilfsmittels, bezogen auf 100 Massenteile der (des) Monomeren, 0,0001 bis 0,05 Massenteile beträgt.

2. Verfahren nach Anspruch 1,
dadurch gekennzeichnet,
daß der hydrophobe Rest A 18 bis 50 C-Atome umfaßt.

3. Verfahren nach Anspruch 1 oder 2,
dadurch gekennzeichnet,
daß der hydrophile Rest B wenigstens 60, insbesondere 80 bis 300 Ethylenoxideinheiten umfaßt.

4. Verfahren nach einem der Ansprüche 1 bis 3,
dadurch gekennzeichnet,
daß der hydrophobe Rest A einen Alkylrest oder einen (Alkyl)arylrest bedeutet.

5. Verfahren nach einem der Ansprüche 1 bis 4,
dadurch gekennzeichnet,
daß die Polymerisation in Batch-Fahrweise begonnen und nach der Teilchenbildungsphase in semikontinuierlicher Emulsionszulauffahrweise oder in semikontinuierlicher Monomerzulauffahrweise fortgeführt und zu Ende geführt wird.

6. Verfahren nach einem der Ansprüche 1 bis 5,
dadurch gekennzeichnet,
daß 0,02 bis 4,0, insbesondere 0,05 bis 3,0 Massenteile eines anionischen Emulgators, bezogen auf 100 Massenteile Monomer, zugesetzt werden.

7. Verfahren nach einem der Ansprüche 1 bis 6,
dadurch gekennzeichnet,

8

daß man als Polymerisationsinitiator 0,1 bis 2,5, insbesondere 0,1 bis 1,5 Massenteile eines Persulfats, bezogen auf 100 Massenteile Monomer, zusetzt.

8. Verfahren nach einem der Ansprüche 1 bis 7,
dadurch gekennzeichnet,
daß man das Monomer/Wasser-Mengenverhältnis so einstellt, daß die Dispersion nach der Polymerisation einen Feststoffgehalt von 30 bis 55 Massen-% aufweist.

**Claims**

1. Process for the manufacture of large-particle, aqueous plastics dispersions by the emulsion polymerisation of monomers polymerisable with free radicals in aqueous phase as a dispersion medium in the presence of an anionic emulsifier, a non-ionic, water-soluble polymer agent, a polymerisation initiator forming free radicals, and a conventional polymerisation agent, wherein the polymer agent is added before polymerisation, and at the start of polymerisation a water-soluble alkali salt and/or ammonium salt is added in a quantity such that 1 to 250 mmol non-emulsifier-bound alkali or ammonium ions are present in the aqueous phase relative to 1l thereof, and wherein the entire polymerisation process is carried out in batch operation, or polymerisation is started in batch operation and, after the particle-formation phase, is continued and completed under conventional conditions for graft polymerisation, the formation of new particles being avoided,
characterised in that
as a polymer agent a substantially non-branched polyethylene oxide having an AB block structure is added, wherein A is an optionally branched, hydrophobic residue comprising 15 to 70 C-atoms, and B a non-branched hydrophilic residue comprising at least 50 ethylene oxide units, and the proportion of the polymer agent is 0.0001 to 0.05 parts by mass to 100 parts by mass of the monomer(s).

2. Process according to claim 1,
characterised in that the hydrophobic residue A comprises 18 to 50 C-atoms.

3. Process according to claim 1,
characterised in that the hydrophilic residue B comprises at least 60, in particular 80 to 300 ethylene oxide units.

4. Process according to one of claims 1 to 3,
characterised in that the hydrophobic residue A is an alkyl residue or an (alkyl)aryl residue.

5. Process according to one of claims 1 to 4,
characterised in that polymerisation is started in batch operation and after the particle-formation phase is continued and completed in semi-continuous emulsion supply operation or in semi-continuous monomer supply operation.

6. Process according to one of claims 1 to 5,
characterised in that 0.02 to 4.0, in particular 0.05 to 3.0 parts by mass, relative to 100 parts by mass of monomer, of an anionic emulsifier are added.

7. Process according to one of claims 1 to 6,
characterised in that as a polymerisation initiator 0.1 to 2.5, in particular 0.1 to 1.5 parts by mass, relative to 100 parts by mass of monomer, of a persulphate are added.

8. Process according to one of claims 1 to 7,
characterised in that the monomer/water ratio is so adjusted that, after polymerisation, the dispersion has a solid content of 30 to 55 % by mass.

**Revendications**

1. Fabrication de production dispersions aqueuses de matières plastiques en grandes particules, par polymérisation en émulsion de monomères polymérisables radicalaires en phase aqueuse en tant que milieu de dispersion en présence d'un agent émulsionnant anionique, d'un agent auxiliaire non-ionique, soluble dans l'eau, d'un promoteur de polymérisation qui forment des radicaux libres et des adjuvants de polymérisation usuels, dans lequel l'agent auxiliaire polymère est ajouté avant la polymérisation et tandis que, au début de la polymérisation, on ajoute un sel alcalin et/ou d'ammonium soluble dans l'eau avec la restriction que dans la phase aqueuse -rapporté à 1 l de celui-ci, 1 à 250 mmol d'ions alcalin et/ou d'ammonium, qui ne sont pas liés à l'agent émulsionnant, sont présents et dans lequel la polymérisation totale est effectuée selon le mode opératoire en lot ou la polymérisation est commencée selon le mode opératoire en lot et après la phase de formation des particules, on poursuit dans les conditions habituelles pour la polymérisation tampon, dans laquelle la formation de nouvelles particules est évitée, et on l'amène à son achèvement,

caractérisé en ce que comme agent auxiliaire polymère, on ajoute un polyoxyde d'éthylène essentiellement non ramifié ayant une structure en blocs AB, dans laquelle A signifie un radical hydrophobe comprenant de 15 à 70 atomes de carbone, éventuellement ramifié et B signifie un radical hydrophile non ramifié, comprenant au moins 50 unités d'oxyde d'éthylène et en ce que la quantité de l'agent auxiliaire polymère -rapporté à 100 parties en masse des (ou du) monomère(s) s'élève a 0,0001 à 0,05 partie en masse.

2. Procédé selon la revendication 1, caractérisé en ce que le radical hydrophobe A comprend de 18 à 50 atomes de carbone.

3. Procédé selon la revendication 1 ou 2, caractérisé en ce que le radical hydrophile B comprend au moins 60 -en particulier de 80 à 300 unités d'oxyde d'éthylène.

4. Procédé selon l'une des revendications 1 à 3, caractérisé en ce que le radical hydrophobe A signifie un radical alcoyle ou un radical (alcoyl)aryle.

5. Procédé selon l'une des revendications 1 à 4, caractérisé en ce que la polymérisation commence dans le mode opératoire par lot et après la phase de formation de particules, dans le mode opératoire d'afflux en émulsion en semi-continu, ou dans le mode opératoire d'afflux du monomère en semi-continu et qu'on l'amène à son achèvement.

6. Procédé selon l'une des revendications 1 à 5, caractérisé en ce que l'on ajoute de 0,02 à 4,0 -en particulier de 0,05 à 3,0 parties en masse d'un agent émulsionnant anionique- rapporté à 100 parties en masse de monomère.

7. Procédé selon l'une des revendications 1 à 6, caractérisé en ce que l'on ajoute comme promoteur de polymérisation de 0,1 à 2,5 -en particulier de 0,1 à 1,5 parties en masse d'un persulfate- rapporté à 100 parties en masse de monomère.

8. Procédé selon l'une des revendications 1 à 7, caractérisé en ce que l'on ajuste le rapport quantitatif monomère/eau de façon que la dispersion après la polymérisation possède une teneur en matières solides de 30 à 55 % en masse.